# EUROPEAN PATENT APPLICATION

(11) **EP 4 657 254 A1**
(43) Date of publication of application: **03.12.2025**
(21) Application number: 24752882.1
(22) Date of filing: 06.02.2024
(51) Int. Cl.: G06F 9/48, G06F 9/50

(54) **JOB SCHEDULING METHOD AND APPARATUS**

(30) Priority: 10.02.2023 CN 202310100688; 31.05.2023 CN 202310635988
(71) Applicant: Huawei Cloud Computing Technologies Co., Ltd., Guiyang, Guizhou 550025 (CN)
(72) Inventor: JIANG, Kaihua, Guiyang, Guizhou 550025 (CN); WANG, Leibo, Guiyang, Guizhou 550025 (CN); HUANG, Jian, Guiyang, Guizhou 550025 (CN)
(74) Representative: Goddar, Heinz J.
(86) International application number: PCT/CN2024/076382
(87) International publication number: WO 2024/165027

(57) **Abstract**

This application discloses a job scheduling method and apparatus, and pertains to the field of resource scheduling technologies. The method includes: obtaining a plurality of implementation combinations based on resource demands of implementation units that need to be deployed for a plurality of to-be-scheduled jobs, where at least a part of the plurality of implementation combinations include implementation units of at least two to-be-scheduled jobs, and a first proportion of a resource demand of the implementation combination to an idle resource specification of a resource node in a resource cluster is greater than a preset value; obtaining a target implementation set based on the plurality of implementation combinations, where the target implementation set includes at least one implementation combination, and includes all implementation units of the plurality of to-be-scheduled jobs; and scheduling, to the resource node based on the target implementation set, the implementation units that need to be deployed for the plurality of to-be-scheduled jobs. In this application, mixed-deployment of the implementation units of the plurality of to-be-scheduled jobs is implemented, so that an aggravation degree of implementation units of a same job can be effectively reduced, a service dispersion degree can be improved, and high service availability can be ensured.

## Description

This application claims priorities to Chinese Patent Application No. 202310100688.X, filed on February 10, 2023 and entitled "JOB SCHEDULING METHOD AND APPARATUS", and to Chinese Patent Application No. 202310635988.8, filed on May 31, 2023 and entitled "JOB SCHEDULING METHOD AND APPARATUS", both of which are incorporated herein by reference in their entireties.

### TECHNICAL FIELD

This application relates to the field of resource scheduling technologies, and in particular, to a job scheduling method and apparatus.

### BACKGROUND

Currently, a size of a cloud computing platform as a service (platform as a service, PaaS) market continues to grow rapidly. The cloud native industry, as an important supporting point of the PaaS market, also continues to grow rapidly. With development and improvement of cloud native technologies, traditional independent services, for example, artificial intelligence (artificial intelligence, Al), big data, and a high performance computing (high performance computing, HPC) cluster, are increasingly migrated to cloud native infrastructure.

A cloud computing platform can use cloud native infrastructure owned by the cloud computing platform to provide required resources for these services, and schedule resources for all services that need to use the cloud native infrastructure in a unified manner. In this way, a process of scheduling resources by the cloud computing platform is actually mixed-scheduling of a plurality of independent services on a unified resource.

However, in a currently used scheduling manner, there is a case in which copies of scheduled services are centrally deployed on a same resource, that is, copies are aggravated. Consequently, service availability is poor.

### SUMMARY

This application provides a job scheduling method and apparatus. In this application, mixed-deployment of implementation units of a plurality of to-be-scheduled jobs is implemented, so that an aggravation degree of implementation units of a same job can be effectively reduced, a service dispersion degree can be improved, and high service availability can be ensured. Technical solutions provided in this application are as follows.

According to a first aspect, this application provides a job scheduling method. The method includes: obtaining a plurality of implementation combinations based on resource demands of implementation units that need to be deployed for a plurality of to-be-scheduled jobs, where at least a part of the plurality of implementation combinations include implementation units of at least two to-be-scheduled jobs, and a first proportion of a resource demand of the implementation combination to an idle resource specification of a resource node in a resource cluster is greater than a preset value; obtaining a target implementation set based on the plurality of implementation combinations, where the target implementation set includes at least one implementation combination, and includes all implementation units of the plurality of to-be-scheduled jobs; and scheduling, to the resource node based on the target implementation set, the implementation units that need to be deployed for the plurality of to-be-scheduled jobs.

In this way, because at least the part of the plurality of implementation combinations include the implementation units of the at least two to-be-scheduled jobs, mixed-deployment of the implementation units of the plurality of to-be-scheduled jobs is implemented in one implementation combination, so that an aggravation degree of implementation units of a same job can be effectively reduced, a service dispersion degree can be improved, and high service availability can be ensured.

In an implementation, after the plurality of implementation combinations are obtained, a plurality of implementation sets including all the implementation units of the plurality of to-be-scheduled jobs may be first obtained based on the plurality of implementation combinations, and then the target implementation set including the at least one implementation combination is obtained from the plurality of implementation sets. For example, obtaining the target implementation set based on the plurality of implementation combinations includes: obtaining a plurality of implementation sets based on the plurality of implementation combinations, where each implementation set includes at least one implementation combination, and includes all the implementation units of the plurality of to-be-scheduled jobs; and determining the target implementation set in the plurality of implementation sets based on features of the plurality of implementation sets.

A part or all of the plurality of implementation combinations may be combined based on a quantity and types of implementation units included in the plurality of implementation combinations and the implementation units of the plurality of to-be-scheduled jobs, to obtain the implementation set including all the implementation units of the plurality of to-be-scheduled jobs. That the implementation set includes all the implementation units of the plurality of to-be-scheduled jobs means that the implementation set needs to meet resource requirements of all the implementation units of the plurality of to-be-scheduled jobs, so that all the implementation units of the plurality of to-be-scheduled jobs can be deployed by using the implementation set. Combination manners of implementation combinations in different implementation sets are different. For example, different implementation sets include different types and/or quantities of implementation combinations. The type of the implementation combination varies by a type and/or quantity of implementation units included in the implementation combination. Different types of implementation units mean that the implementation units belong to different jobs.

Optionally, the feature of the implementation set may include a first total quantity of resource nodes required for deploying the implementation set, a dispersion degree of an implementation unit of a to-be-scheduled job in the implementation set, a second total quantity of implementation combinations of implementation units, of a same to-be-scheduled job, included in the implementation set, and a third total quantity of implementation units, of a same to-be-scheduled job, included in a same implementation combination in the implementation set.

In an implementation, determining the target implementation set in the plurality of implementation sets based on the features of the plurality of implementation sets includes: obtaining feature scores of the plurality of implementation sets based on at least one of the first total quantity, the dispersion degree, the second total quantity, and the third total quantity, where the feature scores are negatively correlated with the first total quantity and the third total quantity, and the feature scores are positively correlated with the dispersion degree and the second total quantity; and determining an implementation set with a highest feature score in the plurality of implementation sets as the target implementation set.

The first total quantity indicates a total quantity of resource nodes required for deploying the plurality of to-be-scheduled jobs. The first total quantity is negatively correlated with the feature score, and an implementation set with a high feature score is determined as the target implementation set, so that the implementation units of the plurality of to-be-scheduled jobs can be deployed by using a minimum quantity of resource nodes, thereby improving job scale-out or scale-in efficiency. Because an implementation unit included in one implementation combination is deployed on one resource node, the second total quantity of implementation combinations of the implementation units, of the same to-be-scheduled job, included in the implementation set is represented as a total quantity of resource nodes required for deploying the implementation units of the same to-be-scheduled job when the job is deployed based on the implementation set. A larger total quantity of resource nodes required for deploying implementation units of a same to-be-scheduled job indicates a larger dispersion degree of the implementation units of the to-be-scheduled job, and higher availability of the to-be-scheduled job. Similarly, the third total quantity of the implementation units, of the same to-be-scheduled job, included in the same implementation combination in the implementation set is represented as a total quantity of implementation units that are deployed on one resource node and that belong to a same to-be-scheduled job when the job is deployed based on the implementation set. A smaller total quantity of implementation units that are deployed on one resource node and that belong to a same to-be-scheduled job indicates a larger dispersion degree of the implementation units of the to-be-scheduled job, and higher availability of the to-be-scheduled job. The dispersion degree of the implementation units of the to-be-scheduled job in the implementation set may be represented by the second total quantity and/or the third total quantity.

In an implementation, scheduling, to the resource node based on the target implementation set, the implementation units that need to be deployed for the plurality of to-be-scheduled jobs includes: determining priorities of all implementation units in the target implementation set; and sequentially scheduling, to the resource node based on the priorities of all the implementation units in the target implementation set, the implementation units that need to be deployed for the plurality of to-be-scheduled jobs.

Optionally, when a deployment requirement of the job needs to ensure a low resource fragmentation rate, the priority of the implementation combination may be determined based on the resource fragmentation rate of the implementation combination, and optionally, the priority of the implementation combination is negatively correlated with the resource fragmentation rate of the implementation combination; and/or when the deployment requirement of the job needs to ensure high availability, the priority of the implementation combination may be determined based on the availability of the implementation combination, and optionally, the priority of the implementation combination is positively correlated with the availability of the implementation combination.

In an implementation, determining the priorities of all the implementation units in the target implementation set includes: obtaining priorities of a plurality of implementation combinations in the target implementation set; and determining the priorities of all the implementation units in the target implementation set based on the priorities of the plurality of implementation combinations.

In addition, the priority of the implementation unit may be determined based on the priority of the implementation combination in which the implementation unit is located and the priority of the job to which the implementation unit belongs; and determining the priorities of all the implementation units in the target implementation set based on the priorities of the plurality of implementation combinations includes: obtaining priorities of the plurality of to-be-scheduled jobs; and determining the priorities of all the implementation units in the target implementation set based on the priorities of the plurality of implementation combinations and the priorities of the plurality of to-be-scheduled jobs, where a priority of an implementation unit of any to-be-scheduled job is positively correlated with a priority of the any to-be-scheduled job. Optionally, the priority of the to-be-scheduled job is obtained based on a service priority and/or creation time of the to-be-scheduled job.

In an implementation, the priority of the to-be-scheduled job may be obtained based on the service priority and/or the creation time of the to-be-scheduled job. The priority of the to-be-scheduled job is positively correlated with the service priority of the to-be-scheduled job, to ensure that a to-be-scheduled job with a high service priority can be preferentially deployed. The priority of the to-be-scheduled job is positively correlated with the creation time of the job, to ensure that the job created earlier can be first deployed. The service priority of the job may be determined based on at least one of a priority (for example, a user member level) of a user to which the job belongs, a priority of a resource purchased by the user for the job, and a priority set by the user for the job, and the service priority of the job is positively correlated with the priority of the user, the priority of the resource, and the priority set by the user for the job. Setting the priority by the user for the job means setting the priority by the user for the job based on a service requirement of the user, to ensure implementation effect of a job with a high priority.

A priority of an implementation unit in any implementation combination is positively correlated with a priority of the any implementation combination, and a priority of an implementation unit of any to-be-scheduled job is positively correlated with a priority of the any to-be-scheduled job. In an implementation, the priority of the implementation unit may be equal to an average of the priority of the implementation combination in which the implementation unit is located and the priority of the job to which the implementation unit belongs.

Optionally, the priority of the implementation combination is obtained based on a resource fragmentation rate and/or availability of the implementation combination.

A higher priority of the implementation unit indicates that the implementation unit is more important. When a part or all of the implementation units of the plurality of to-be-scheduled jobs need to be released, the implementation units may be sequentially released in descending order of the priorities of all the implementation units in the target implementation set, that is, an implementation unit with a low priority is first released, and then an implementation unit with a high priority is released, to ensure that a more important implementation unit is released later.

According to a second aspect, this application provides a job scheduling apparatus. The apparatus includes: an obtaining module, configured to obtain a plurality of implementation combinations based on resource demands of implementation units that need to be deployed for a plurality of to-be-scheduled jobs, where at least a part of the plurality of implementation combinations include implementation units of at least two to-be-scheduled jobs, and a first proportion of a resource demand of the implementation combination to an idle resource specification of a resource node in a resource cluster is greater than a preset value, where the obtaining module is further configured to obtain a target implementation set based on the plurality of implementation combinations, where the target implementation set includes at least one implementation combination, and includes all implementation units of the plurality of to-be-scheduled jobs; and a deployment module, configured to schedule, to the resource node based on the target implementation set, the implementation units that need to be deployed for the plurality of to-be-scheduled jobs.

Optionally, the obtaining module is specifically configured to: obtain a plurality of implementation sets based on the plurality of implementation combinations, where each implementation set includes at least one implementation combination, and includes all the implementation units of the plurality of to-be-scheduled jobs; and determine the target implementation set in the plurality of implementation sets based on features of the plurality of implementation sets.

Optionally, the feature of the implementation set includes a first total quantity of resource nodes required for deploying the implementation set, a dispersion degree of an implementation unit of a to-be-scheduled job in the implementation set, a second total quantity of implementation combinations of implementation units, of a same to-be-scheduled job, included in the implementation set, and a third total quantity of implementation units, of a same to-be-scheduled job, included in a same implementation combination in the implementation set.

Optionally, the obtaining module is specifically configured to: obtain feature scores of the plurality of implementation sets based on at least one of the first total quantity, the dispersion degree, the second total quantity, and the third total quantity, where the feature scores are negatively correlated with the first total quantity and the third total quantity, and the feature scores are positively correlated with the dispersion degree and the second total quantity; and determine an implementation set with a highest feature score in the plurality of implementation sets as the target implementation set.

Optionally, the deployment module is specifically configured to: determine priorities of all implementation units in the target implementation set; and sequentially schedule, to the resource node based on the priorities of all the implementation units in the target implementation set, the implementation units that need to be deployed for the plurality of to-be-scheduled jobs.

Optionally, the deployment module is specifically configured to: obtain priorities of a plurality of implementation combinations in the target implementation set; and determine the priorities of all the implementation units in the target implementation set based on the priorities of the plurality of implementation combinations.

Optionally, a priority of an implementation unit in any implementation combination is positively correlated with a priority of the any implementation combination.

Optionally, the priority of the implementation combination is obtained based on a resource fragmentation rate and/or availability of the implementation combination.

Optionally, the deployment module is specifically configured to: obtain priorities of the plurality of to-be-scheduled jobs; and determine the priorities of all the implementation units in the target implementation set based on the priorities of the plurality of implementation combinations and the priorities of the plurality of to-be-scheduled jobs.

Optionally, a priority of an implementation unit of any to-be-scheduled job is positively correlated with a priority of the any to-be-scheduled job.

Optionally, the priority of the to-be-scheduled job is obtained based on a service priority and/or creation time of the to-be-scheduled job.

Optionally, the deployment module is further configured to: when the implementation units of the plurality of to-be-scheduled jobs need to be released, sequentially release the implementation units of the plurality of to-be-scheduled jobs in descending order of the priorities of all the implementation units in the target implementation set.

According to a third aspect, this application provides a computing device, including a memory and a processor. The memory stores program instructions. The processor runs the program instructions to perform the method according to any one of the first aspect and the possible implementations of the first aspect in this application.

According to a fourth aspect, this application provides a computing device cluster, including a plurality of computing devices. The plurality of computing devices include a plurality of processors and a plurality of memories, the plurality of memories store program instructions, and the plurality of processors run the program instructions, so that the computing device cluster performs the method according to any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a computing device, the computing device is enabled to perform the method according to any one of the first aspect and the possible implementations of the first aspect in this application.

According to a sixth aspect, this application provides a computer program product including instructions. When the computer program product is run on a computer, the computer is enabled to perform the method according to any one of the first aspect and the possible implementations of the first aspect in this application.

### BRIEF DESCRIPTION OF DRAWINGS

FIG. 1 is a diagram of a structure of an implementation environment related to a job scheduling method according to an embodiment of this application;
FIG. 2 is a diagram of a structure of an implementation environment related to another job scheduling method according to an embodiment of this application;
FIG. 3 is a flowchart of a job scheduling method according to an embodiment of this application;
FIG. 4 is a flowchart of obtaining implementation units that need to be deployed for a plurality of to-be-scheduled jobs according to an embodiment of this application;
FIG. 5 is a diagram of resource requirements of a service a and a service b according to an embodiment of this application;
FIG. 6 is a diagram of an available resource according to an embodiment of this application;
FIG. 7 is a diagram of an implementation combination according to an embodiment of this application;
FIG. 8 is a diagram of an implementation combination according to an embodiment of this application;
FIG. 9 is a diagram of an implementation combination according to an embodiment of this application;
FIG. 10 is a diagram of an implementation combination according to an embodiment of this application;
FIG. 11 is a flowchart of obtaining a target implementation set based on a plurality of implementation combinations according to an embodiment of this application, where the target implementation set includes at least one implementation combination, and includes all implementation units of a plurality of to-be-scheduled jobs;
FIG. 12 is a diagram of a target implementation set according to an embodiment of this application;
FIG. 13 is a flowchart of determining priorities of all implementation units in a target implementation set according to an embodiment of this application;
FIG. 14 is a flowchart of determining priorities of all implementation units in a target implementation set based on priorities of a plurality of implementation combinations according to an embodiment of this application;
FIG. 15 is a diagram of a scheduling result obtained by using a job scheduling method provided in embodiments of this application according to an embodiment of this application;
FIG. 16 is a diagram of a scheduling result obtained by using a related technology according to an embodiment of this application;
FIG. 17 is a diagram of quantities of copies, of a service a and a service b, that need to be run from 8:00 to 16:00 according to an embodiment of this application;
FIG. 18 is a diagram of a result of scheduling the service a and the service b by using a job scheduling method provided in embodiments of this application in a one-hour period in an elastic scaling manner shown in FIG. 17 according to an embodiment of this application;
FIG. 19 is a diagram of a result of scheduling the service a and the service b by using a related technology in a one-hour period in an elastic scaling manner shown in FIG. 17 according to an embodiment of this application;
FIG. 20 is a diagram of a job scheduling apparatus according to an embodiment of this application;
FIG. 21 is a diagram of a structure of a computing device according to an embodiment of this application; and
FIG. 22 is a diagram of a structure of a computing device cluster according to an embodiment of this application.

### DESCRIPTION OF EMBODIMENTS

To make objectives, technical solutions, and advantages of this application clearer, the following further describes implementations of this application in detail with reference to accompanying drawings.

Embodiments of this application provide a job scheduling method. In the method, a plurality of implementation combinations can be obtained based on resource demands of implementation units that need to be deployed for a plurality of to-be-scheduled jobs, so that at least a part of the plurality of implementation combinations include implementation units of at least two to-be-scheduled jobs, and a first proportion of a resource demand of the implementation combination to an idle resource specification of a resource node in a resource cluster is greater than a preset value. A target implementation set is obtained based on the plurality of implementation combinations, so that the target implementation set includes at least one implementation combination, and includes all implementation units of the plurality of to-be-scheduled jobs. Then, the implementation units that need to be deployed for the plurality of to-be-scheduled jobs are scheduled to the resource node based on the target implementation set.

In this way, because at least the part of the plurality of implementation combinations include the implementation units of the at least two to-be-scheduled jobs, mixed-deployment of the implementation units of the plurality of to-be-scheduled jobs is implemented in one implementation combination, so that an aggravation degree of implementation units of a same job can be effectively reduced, a service dispersion degree can be improved, and high service availability can be ensured.

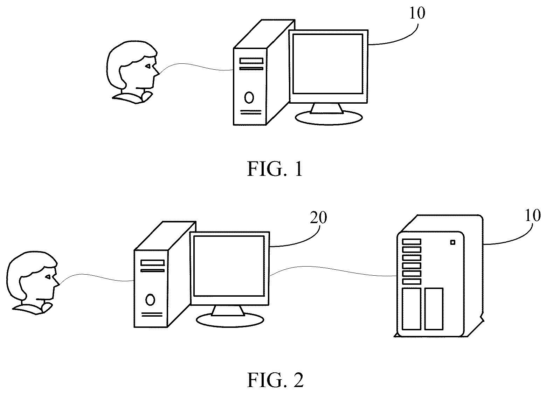

FIG. 1 is a diagram of a structure of an implementation environment related to a job scheduling method according to an embodiment of this application. As shown in FIG. 1, the implementation environment includes a job scheduling device 10. The job scheduling device 10 is configured to perform the job scheduling method provided in embodiments of this application.

In an implementation, the job scheduling method provided in embodiments of this application may be implemented by running an executable program by the job scheduling device 10. For example, the executable program of the job scheduling method may be presented in a form of an application installation package. After the application installation package is installed in the job scheduling device 10, the job scheduling method can be implemented by running the executable program. In this case, the job scheduling device 10 may be a terminal. The terminal may be a computer, a personal computer, a portable mobile terminal, a multimedia player, an e-book reader, a wearable device, or the like.

In another implementation environment, as shown in FIG. 2, the implementation environment may include a job scheduling device 10 and a client 20. The client 20 can establish a communication connection to the job scheduling device 10. For example, the communication connection may be established between the client 20 and the job scheduling device 10 through a network. Optionally, the network may be a local area network, the internet, or another network. This is not limited in embodiments of this application. In the implementation environment in FIG. 2, a user may interact with the job scheduling device 10 through the client 20. For example, the user may send a job scheduling request to the job scheduling device 10 through the client 20, and/or purchase a resource used to deploy a job. The job scheduling device 10 may deploy, by using the job scheduling method provided in embodiments of this application, the job used to implement a user service.

In an implementation, the client 20 may be a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, a smart wearable device, a smart vehicle-mounted device, an internet of things device, or the like. The job scheduling device 10 may be a server, a server cluster including several servers, or a cloud computing service center. A large quantity of basic resources of a cloud service provider are deployed in the cloud computing service center. For example, computing resources, storage resources, and network resources are deployed in the cloud computing service center. The cloud computing service center may implement, by using the large quantity of basic resources, the job scheduling method provided in embodiments of this application.

When the job scheduling device 10 is implemented through the cloud computing service center, the user may access a cloud computing platform through the client 20, and indicate, through the cloud computing platform, the job scheduling device 10 to perform job scheduling. In this case, a job scheduling function provided by the job scheduling device 10 for the user may be abstracted by a cloud service provider on the cloud computing platform into a job scheduling cloud service. After the user purchases the job scheduling cloud service on the cloud computing platform, the cloud computing platform can deploy the job of the user by using a resource of the cloud computing service center and by using the job scheduling method provided in embodiments of this application. In addition, the job scheduling cloud service may be provided as an independent cloud service, or may be provided as an additional service of another cloud service. Optionally, the cloud computing platform may be a cloud computing platform of a central cloud, a cloud computing platform of an edge cloud, or a cloud computing platform including a central cloud and an edge cloud. This is not specifically limited in embodiments of this application.

It should be noted that in the implementation environment shown in FIG. 2, the job scheduling device 10 may alternatively be implemented by another resource platform that is not the cloud computing platform. This is not specifically limited in embodiments of this application. In this case, the job scheduling device 10 may be implemented by using a resource in the another resource platform, and provide a job scheduling related service for the user.

It should be understood that the foregoing content is an example for describing an application scenario of the job scheduling method provided in embodiments of this application, and does not constitute a limitation on the application scenario of the job scheduling method. A person of ordinary skill in the art may learn that, as a service requirement changes, application scenarios of the job scheduling method may be adjusted based on an application requirement, and are not enumerated in embodiments of this application. For example, the job scheduling method provided in embodiments of this application may not only be applied to scheduling and rescheduling scenarios of a cloud native platform, but also may be further extended to a platform, for example, a high performance computing (high performance computing, HPC) cluster such as Slurm or LSF, or various underlying resource platforms such as a virtual machine, a container, and a bare metal.

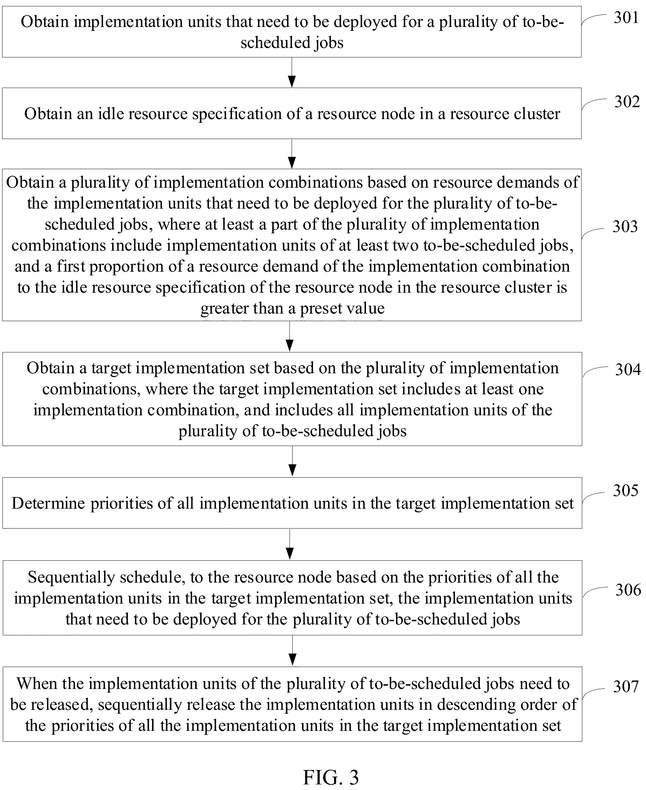

The following describes the job scheduling method provided in embodiments of this application. The method may be applied to a cloud computing platform. The following uses an example in which the method is applied to the cloud computing platform for description. As shown in FIG. 3, the job scheduling method includes the following steps.

Step 301: Obtain implementation units that need to be deployed for a plurality of to-be-scheduled jobs.

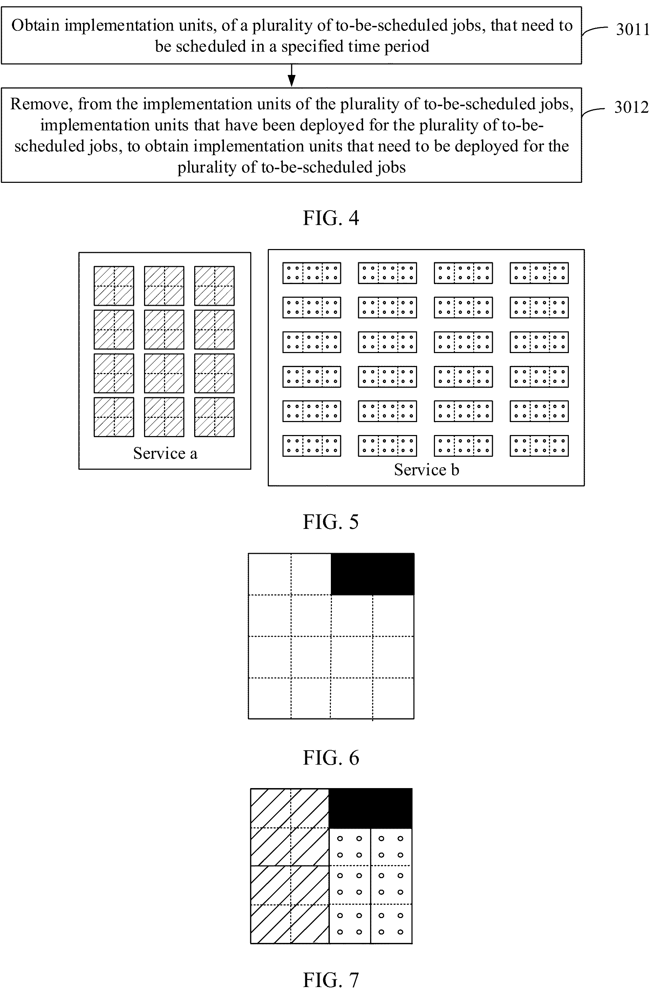

As shown in FIG. 4, an implementation process of step 301 includes the following steps.

Step 3011: Obtain implementation units, of the plurality of to-be-scheduled jobs, that need to be scheduled in a specified time period.

Obtaining the implementation units of the to-be-scheduled jobs is obtaining a total quantity of implementation units required for implementing the to-be-scheduled jobs and specifications of the implementation units. In addition, to simplify computing, a proportion of the total quantity of implementation units of the plurality of to-be-scheduled jobs may be further obtained. Optionally, the specification of the implementation unit indicates a quantity of processors required by the implementation unit, a quantity of cores of the processor, a size of a memory, and the like. In an implementation, the implementation unit may be a virtual instance such as a container or a virtual machine. A job is used to implement a function in a user service, and each function needs to be collaboratively implemented by a plurality of implementation units. A plurality of implementation units that collaboratively implement a same function are also referred to as a plurality of copies of a job used to implement the function. For example, in a process of implementing the user service, a user data synchronization job needs to be executed, and a user data synchronization function needs to be implemented by a plurality of containers. The plurality of containers are a plurality of implementation units for implementing the user data synchronization job, and the plurality of containers are also referred to as a plurality of copies for executing the user data synchronization job.

The implementation unit of the to-be-scheduled job may be obtained based on a scheduling request of a user. In an implementation, the scheduling request of the user may indicate the to-be-scheduled job and job load of the to-be-scheduled job, and a cloud computing platform can obtain, based on the job load, the implementation unit required for implementing the job load. For example, a correspondence between the job load and the implementation unit is preset in the cloud computing platform. The correspondence indicates a quantity and specifications of implementation units required for implementing the job load when a specified resource is used. Therefore, when the job load is known, the implementation unit required for implementing the to-be-scheduled job may be obtained based on the correspondence and the job load.

Alternatively, the implementation unit of the to-be-scheduled job may not be obtained based on the scheduling request of the user. In an implementation, the cloud computing platform may estimate a job that needs to be scheduled in a specified time period and job load of the job. After obtaining the job load of the to-be-scheduled job through estimation, the cloud computing platform may obtain, based on a correspondence between the job load and the implementation unit, a quantity and specifications of implementation units required for implementing the job load. The job that needs to be scheduled in the specified time period and the job load of the job may be obtained based on historical scheduling of the job or historical scheduling of a similar job of the job. For example, when the historical scheduling of the job indicates that scheduling of specified job load is performed in a specified time period every day, the cloud computing platform may obtain a life cycle of a to-be-scheduled job through estimation based on the specified time period, that is, obtain a specified time period of the to-be-scheduled job; obtain job load of the to-be-scheduled job in the specified time period through estimation based on the specified job load; and obtain, based on the job load, an implementation unit that needs to be scheduled for the to-be-scheduled job in the specified time period. The job has a lot in common with a similar job of the job, so that the implementation unit that needs to be scheduled for the job in the specified time period can be estimated based on the similar job of the job. Historical scheduling of the job and the similar job of the job can reflect a scheduling feature of the job. The job load of the job is estimated based on a historical scheduling feature, and the implementation unit, of the job, that needs to be scheduled for the job in the specified time period is determined based on the job load, so that accuracy of the estimated implementation unit can be ensured. The historical scheduling of the job and the similar job of the job indicates an implementation unit used to implement job scheduling in a historical time period. That two jobs are similar may mean that job load changes of the two jobs are similar, services implemented by the two jobs are similar, and/or the like. Usually, jobs from a same user and belonging to a same service are similar jobs. For example, jobs from a same user and with a same service name prefix are similar jobs. In some scenarios, the user may mark services with similarity, so that similar jobs may be determined based on the marks. For another example, when an implementation unit of a to-be-deployed job needs to be obtained, learning may be performed based on service load of a job that has been deployed and service load of the to-be-deployed job, to obtain jobs with similarity.

Step 3012: Remove, from the implementation units of the plurality of to-be-scheduled jobs, implementation units that have been deployed for the plurality of to-be-scheduled jobs, to obtain the implementation units that need to be deployed for the plurality of to-be-scheduled jobs.

Before step 301 is performed, the implementation units of the plurality of to-be-scheduled jobs may include the implementation units that have been deployed. Therefore, after the implementation units, of the plurality of to-be-scheduled jobs, that need to be scheduled in the specified time period are obtained in step 3011, the implementation units that have been deployed may be further removed from the implementation units of the plurality of to-be-scheduled jobs, to obtain the implementation units that need to be deployed for the plurality of to-be-scheduled jobs.

For example, assuming that a service a and a service b need to be deployed in the specified time period, the service a is implemented through a job a, and the service b is implemented through a job b. As shown in FIG. 5, the service a includes 12 copies, and each copy requires a 4-core central processing unit (central processing unit, CPU); and the service b includes 24 copies, and each copy requires a 3-core CPU. Both the 12 copies included in the service a and the 24 copies included in the service b need to be deployed, and a proportion of a quantity of copies of the service a to that of the service b is 1:2.

Step 302: Obtain an idle resource specification of a resource node in a resource cluster.

When the idle resource specification is obtained, a resource node (for example, a server) having an available resource may be determined in the resource cluster based on a quantity and specifications of implementation units that need to be deployed, and a specification of the available resource of the resource node is determined as the idle resource specification. For an unoccupied resource in the resource cluster, when a specification of the unoccupied resource can meet the quantity and the specifications of implementation units that need to be deployed, the unoccupied resource is determined as an idle resource used to deploy the implementation unit. In this case, the specification of the idle resource is the idle resource specification.

In a resource allocation scenario, resources are usually in the following three states: (1) a resource that has been paid by the user; (2) a resource that is not paid by the user but has been indicated with a purchase intention; and (3) a resource that is not paid by the user and is not indicated with a purchase intention. A use priority order of the resources in the three states is usually: preferentially using the resource that has been paid by the user; when the available resource in the resource that has been paid by the user does not exist, using the resource that is not paid by the user but has been indicated with the purchase intention; and when the available resource in the resource that is not paid by the user but has been indicated with the purchase intention does not exist, or when the resource that is not paid by the user but has been indicated with the purchase intention does not exist, using the resource that is not paid by the user and is not indicated with the purchase intention. The resource that is not paid by the user but has been indicated with the purchase intention is usually a resource having a specified specification, and the resource may be a resource selected by the user from a resource cluster having a plurality of specifications. Usually, the resource that is not paid by the user and is not indicated with the purchase intention is not specified. When the resource in this state needs to be used, a specification of the resource may be recommended by a resource scheduler of a resource pool, configured by the user, specified by the user based on experience, or the like. For example, when all the resources in the three states exist, the cloud computing platform may preferentially determine, in the resource that has been paid by the user, a resource that can meet the specification of the implementation unit; when the resource that meets the specification of the implementation unit does not exist in the resource that has been paid by the user, determine, in the resource that is not paid by the user but has been indicated with the purchase intention, the resource that can meet the specification of the implementation unit; and when the resource that meets the specification of the implementation unit does not exist in the resource that is not paid by the user but has been indicated with the purchase intention, determine, in the resource that is not paid by the user and is not indicated with the purchase intention, the resource that can meet the specification of the implementation unit, and determine the resource that meets the specification of the implementation unit as the idle resource specification. For example, after searching in the resource cluster, an available resource shown in FIG. 6 is obtained. The available resource has a 16-core CPU, and a 2-core CPU needs to be reserved for system running, as shown in a block filled with black in FIG. 6. In this case, the idle resource specification is a 14-core CPU, for example, a 14-core CPU shown in an unfilled block in FIG. 6.

Step 303: Obtain a plurality of implementation combinations based on resource demands of the implementation units that need to be deployed for the plurality of to-be-scheduled jobs, where at least a part of the plurality of implementation combinations include implementation units of at least two to-be-scheduled jobs, and a first proportion of a resource demand of the implementation combination to the idle resource specification of the resource node in the resource cluster is greater than a preset value.

When the implementation combination is obtained, a construction target of the implementation combination may be first selected to be obtained. For example, determining whether the implementation combination needs to meet a low fragmentation rate, or meet high availability, or achieve a balance between a low fragmentation rate and high availability. It should be noted that determining that the construction target used for the implementation combination is the fragmentation rate and the availability is merely an example, and another target is also used during job scheduling, and may be adjusted based on a resource deployment requirement. After the construction target is determined, for any idle resource specification, an implementation unit is selected based on the construction target. A sum of specifications of selected implementation units is less than the idle resource specification, and a difference between the idle resource specification and the sum of the specifications of the selected implementation units is less than a specification of any implementation unit, so that the first proportion of the resource demand of the implementation combination to the idle resource specification of the resource node in the resource cluster is greater than the preset value. In this case, the selected implementation units form the implementation combination that meets the idle resource specification. The resource demand of the implementation combination may be equal to a sum of resource demands of all implementation units in the implementation combination. The resource cluster may include one idle resource specification, or may include a plurality of idle resource specifications. When an implementation combination is obtained based on a plurality of idle resource specifications, for an implementation combination obtained based on any idle resource specification, a first proportion of a resource demand of the implementation combination to the any idle resource specification needs to be greater than the preset value. The preset value may be set based on an application requirement. For example, when the application does not have a strict requirement on the fragmentation rate, the preset value may be set to a relatively large value. When the application has a relatively strict requirement on the fragmentation rate, the preset value may be set to a relatively small value.

In addition, because there are a plurality of to-be-scheduled jobs, and specifications of implementation units of different to-be-scheduled jobs may be the same or different, the plurality of implementation combinations may be obtained based on the foregoing descriptions of obtaining the implementation combination. Implementation units included in different implementation combinations are combined in different manners, and at least the part of the plurality of implementation combinations include the implementation units of the at least two to-be-scheduled jobs. Whether the combination manners of the implementation units are the same may be reflected by different types and quantities of the implementation units that form the implementation combination. When the implementation combination includes the implementation units of the at least two to-be-scheduled jobs, implementation units from different jobs are mixed in the implementation combination. If the implementation units are deployed based on the implementation combination, an aggravation degree of implementation units of a same job can be effectively reduced, a service dispersion degree can be improved, and high service availability can be ensured.

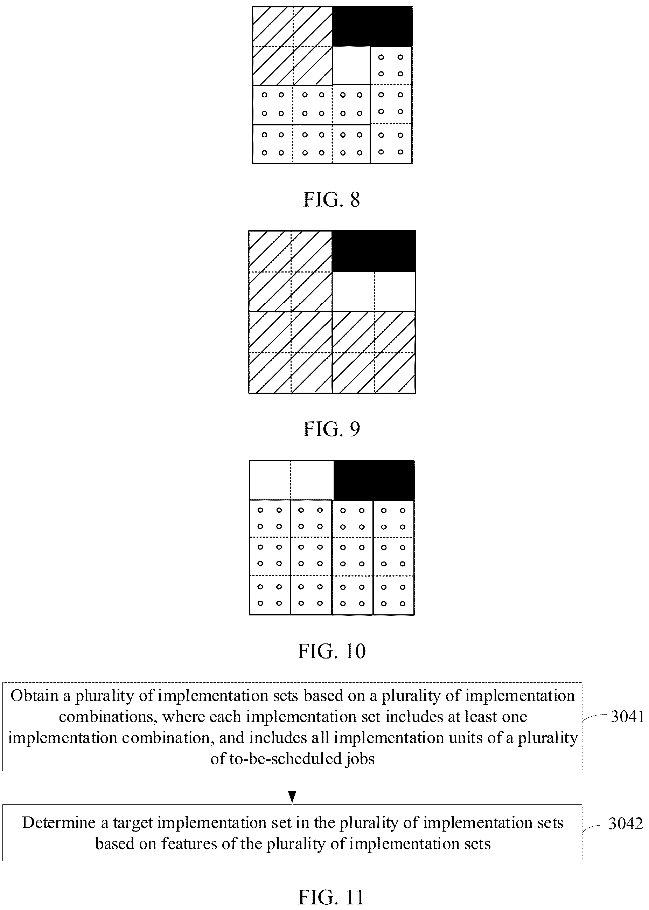

For example, FIG. 7 to FIG. 10 are diagrams of the plurality of implementation combinations obtained by deploying the copies of the service a and the service b shown in FIG. 5 based on the idle resource specification shown in FIG. 6. The idle resource specification shown in FIG. 6 is a 14-core CPU. Each copy of the service a requires a 4-core CPU, and each copy of the service b requires a 3-core CPU. It is assumed that the preset value is 80%. As shown in FIG. 7, if the implementation combination includes two copies of the service a and two copies of the service b, a resource demand of the implementation combination is a 14-core CPU, and a first proportion of the resource demand of the implementation combination to the idle resource specification is 100%, the first proportion is greater than the preset value 80%. As shown in FIG. 8, if the implementation combination includes one copy of the service a and three copies of the service b, a resource demand of the implementation combination is a 13-core CPU, and a first proportion of the resource demand of the implementation combination to the idle resource specification is 92.9%, the first proportion is greater than the preset value 80%. As shown in FIG. 9, if the implementation combination includes three copies of the service a, a resource demand of the implementation combination is a 12-core CPU, and a first proportion of the resource demand of the implementation combination to the idle resource specification is 85.7%, the first proportion is greater than the preset value 80%. As shown in FIG. 10, if the implementation combination includes four copies of the service b, a resource demand of the implementation combination is a 12-core CPU, and a first proportion of the resource demand of the implementation combination to the idle resource specification is 85.7%, the first proportion is greater than the preset value 80%.

Step 304: Obtain a target implementation set based on the plurality of implementation combinations, where the target implementation set includes at least one implementation combination, and includes all implementation units of the plurality of to-be-scheduled jobs.

In an implementation, after the plurality of implementation combinations are obtained, a plurality of implementation sets including all the implementation units of the plurality of to-be-scheduled jobs may be first obtained based on the plurality of implementation combinations, and then the target implementation combination including the at least one implementation combination is obtained from the plurality of implementation sets. As shown in FIG. 11, an implementation process of step 304 includes the following steps.

Step 3041: Obtain the plurality of implementation sets based on the plurality of implementation combinations, where each implementation set includes the at least one implementation combination, and includes all the implementation units of the plurality of to-be-scheduled jobs.

When step 3041 is performed, a part or all of the plurality of implementation combinations may be combined based on a quantity and types of implementation units included in the plurality of implementation combinations and the implementation units of the plurality of to-be-scheduled jobs, to obtain the implementation set including all the implementation units of the plurality of to-be-scheduled jobs. That the implementation set includes all the implementation units of the plurality of to-be-scheduled jobs means that the implementation set needs to meet resource requirements of all the implementation units of the plurality of to-be-scheduled jobs, so that all the implementation units of the plurality of to-be-scheduled jobs can be deployed by using the implementation set. Combination manners of implementation combinations in different implementation sets are different. For example, different implementation sets include different types and/or quantities of implementation combinations. The type of the implementation combination varies by a type and/or quantity of implementation units included in the implementation combination. Different types of implementation units mean that the implementation units belong to different jobs. The process of obtaining the implementation set is equivalent to a problem of converting a packing problem of the implementation unit into an implementation combination having a fixed combination manner, and determining a deployment policy by using the implementation combination, to cover shortest paths of all to-be-scheduled jobs. In this way, solution complexity of determining the deployment policy is reduced, computing time of determining the deployment policy is shortened, and robustness of the deployment policy is improved.

Step 3042: Determine the target implementation set in the plurality of implementation sets based on features of the plurality of implementation sets.

After the plurality of implementation sets are obtained, the plurality of implementation sets may be filtered, to obtain the target implementation set. In an implementation, the features of the plurality of implementation sets may be obtained, and the plurality of implementation sets are filtered based on the features of the plurality of implementation sets. Optionally, the feature of the implementation set includes a first total quantity of resource nodes required for deploying the implementation set, a dispersion degree of an implementation unit of a to-be-scheduled job in the implementation set, a second total quantity of implementation combinations of implementation units, of a same to-be-scheduled job, included in the implementation set, and a third total quantity of implementation units, of a same to-be-scheduled job, included in a same implementation combination in the implementation set. In an implementation, when the target implementation set is determined in the plurality of implementation sets, feature scores of the plurality of implementation sets may be obtained based on at least one of the first total quantity, the dispersion degree, the second total quantity, and the third total quantity; and an implementation set with a highest feature score in the plurality of implementation sets is determined as the target implementation set. Optionally, the feature scores are negatively correlated with the first total quantity and the third total quantity, and the feature scores are positively correlated with the second total quantity and the dispersion degree.

The first total quantity indicates a total quantity of resource nodes required for deploying the plurality of to-be-scheduled jobs. The first total quantity is negatively correlated with the feature score, and an implementation set with a high feature score is determined as the target implementation set, so that the implementation units of the plurality of to-be-scheduled jobs can be deployed by using a minimum quantity of resource nodes, thereby improving job scale-out or scale-in efficiency. Because an implementation unit included in one implementation combination is deployed on one resource node, the second total quantity of implementation combinations of the implementation units, of the same to-be-scheduled job, included in the implementation set is represented as a total quantity of resource nodes required for deploying the implementation units of the same to-be-scheduled job when the job is deployed based on the implementation set. A larger total quantity of resource nodes required for deploying implementation units of a same to-be-scheduled job indicates a larger dispersion degree of the implementation units of the to-be-scheduled job, and higher availability of the to-be-scheduled job. Similarly, the third total quantity of the implementation units, of the same to-be-scheduled job, included in the same implementation combination in the implementation set is represented as a total quantity of implementation units that are deployed on one resource node and that belong to a same to-be-scheduled job when the job is deployed based on the implementation set. A smaller total quantity of implementation units that are deployed on one resource node and that belong to a same to-be-scheduled job indicates a larger dispersion degree of the implementation units of the to-be-scheduled job, and higher availability of the to-be-scheduled job. The dispersion degree of the implementation units of the to-be-scheduled job in the implementation set may be represented by the second total quantity and/or the third total quantity. It should be noted that the policy used for determining the target implementation set may alternatively use another target, and the target may be adjusted based on a resource deployment requirement. The minimum quantity of resource nodes and availability are merely examples.

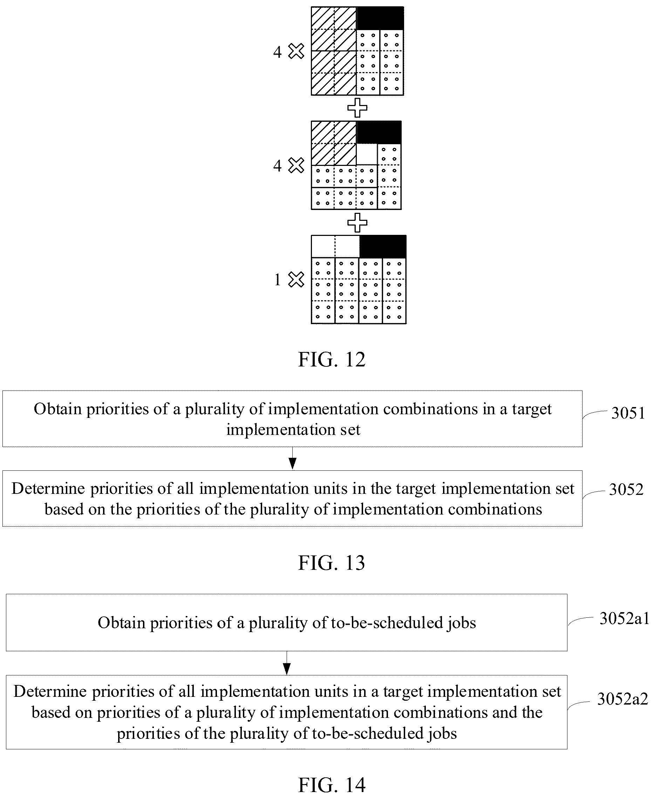

For example, FIG. 12 is a diagram of the target implementation set selected according to the foregoing implementation. As shown in FIG. 12, the target implementation set includes four implementation combinations shown in FIG. 7, four implementation combinations shown in FIG. 8, and one implementation combination shown in FIG. 10. In the combination manner, the target implementation set includes 12 copies of the service a and 24 copies of the service b, that is, the target implementation set includes all copies of the service a and the service b. When the implementation unit is deployed based on the target implementation set, the service a and the service b can be implemented by using the deployed implementation unit.

Step 305: Determine priorities of all implementation units in the target implementation set.

Optionally, as shown in FIG. 13, determining the priorities of all the implementation units in the target implementation set includes the following steps.

Step 3051: Obtain priorities of the plurality of implementation combinations in the target implementation set.

When step 3051 is performed, the plurality of implementation combinations included in the target implementation set may be first determined, and then a priority of each implementation combination is determined. The priority of the implementation combination is determined based on a deployment requirement of the job. In an implementation, when the deployment requirement of the job needs to ensure a low resource fragmentation rate, the priority of the implementation combination may be determined based on the resource fragmentation rate of the implementation combination, and optionally, the priority of the implementation combination is negatively correlated with the resource fragmentation rate of the implementation combination; and/or when the deployment requirement of the job needs to ensure high availability, the priority of the implementation combination may be determined based on the availability of the implementation combination, and optionally, the priority of the implementation combination is positively correlated with the availability of the implementation combination. For example, assuming that the deployment requirement of the job needs to ensure a low resource fragmentation rate and high availability, for the four implementation combinations shown in FIG. 7 to FIG. 10, resource utilization sequentially decreases, and resource fragmentation rates of the four implementation combinations sequentially increase; and when availability is measured based on a third total quantity of implementation units, of a same to-be-scheduled job, included in a same implementation combination, availability of the four implementation combinations sequentially decreases, and priorities of the four implementation combinations may sequentially decrease. A larger third total quantity of implementation units, of a same to-be-scheduled job, included in a same implementation combination indicates lower availability of the implementation combination. When one implementation combination includes implementation units of a plurality of to-be-scheduled jobs, availability is determined using a to-be-scheduled job with a maximum third total quantity in the plurality of to-be-scheduled jobs.

It should be noted that an execution occasion of step 3051 may be adjusted based on an application requirement. For example, the priority of each implementation combination may be immediately obtained after the implementation combination is obtained.

Step 3052: Determine the priorities of all the implementation units in the target implementation set based on the priorities of the plurality of implementation combinations.

The priority of the implementation unit may be determined based on the priority of the implementation combination in which the implementation unit is located and the priority of the job to which the implementation unit belongs. In an implementation, as shown in FIG. 14, an implementation process of step 3052 may include the following steps.

Step 3052a1: Obtain priorities of the plurality of to-be-scheduled jobs.

In an implementation, the priority of the to-be-scheduled job may be obtained based on a service priority and/or creation time of the to-be-scheduled job. The priority of the to-be-scheduled job is positively correlated with the service priority of the to-be-scheduled job, to ensure that a to-be-scheduled job with a high service priority can be preferentially deployed. The priority of the to-be-scheduled job is positively correlated with the creation time of the job, to ensure that the job created earlier can be first deployed. The service priority of the job may be determined based on at least one of a priority (for example, a user member level) of a user to which the job belongs, a priority of a resource purchased by the user for the job, and a priority set by the user for the job, and the service priority of the job is positively correlated with the priority of the user, the priority of the resource, and the priority set by the user for the job. Setting the priority by the user for the job means setting the priority by the user for the job based on a service requirement of the user, to ensure implementation effect of a job with a high priority. For example, if a user A submits the service a and the service b, and an application requirement of the user A indicates that the service a is more important, the user may set a high priority for the service a, and set a low priority for the service b.

Step 3052a2: Determine the priorities of all the implementation units in the target implementation set based on the priorities of the plurality of implementation combinations and the priorities of the plurality of to-be-scheduled jobs.

A priority of an implementation unit in any implementation combination is positively correlated with a priority of the any implementation combination, and a priority of an implementation unit of any to-be-scheduled job is positively correlated with a priority of the any to-be-scheduled job. In an implementation, the priority of the implementation unit may be equal to an average of the priority of the implementation combination in which the implementation unit is located and the priority of the job to which the implementation unit belongs. For example, it is assumed that a priority of the service a is 1 (a smaller number indicates a higher priority), and a priority of the service b is 2, and according to the descriptions of step 3051, it can be learned that priorities of the four implementation combinations shown in FIG. 7 to FIG. 10 sequentially decrease; and it is assumed that the priorities of the four implementation combinations are sequentially 1, 2, 3, and 4. The target implementation set includes four implementation combinations shown in FIG. 7, four implementation combinations shown in FIG. 8, and one implementation combination shown in FIG. 10. The implementation combination shown in FIG. 7 and the implementation combination FIG. 8 each include the copies of the service a and the service b, and the implementation combination of FIG. 10 includes the copies of the service b. According to that the priority of the implementation unit is equal to the average value of the priority of the implementation combination in which the implementation unit is located and the priority of the job to which the implementation unit belongs, the following may be obtained: In FIG. 7, a priority of a copy of the service a is (1+1)/2=1, and a priority of a copy of the service b is (2+1)/2=1.5; in FIG. 8, a priority of a copy of the service a is (1+2)/2=1.5, and a priority of a copy of the service b is (2+2)/2=2; and in FIG. 10, a priority of a copy of the service b is (2+4)/2=3. Correspondingly, it may be obtained that a priority sequence of the implementation units in the target implementation set is: the priority of the copy of the service a in FIG. 7>the priority of the copy of the service b in FIG. 7=the priority of the copy of the service a in FIG. 8>the priority of the copy of the service b in FIG. 8>the priority of the copy of the service b in FIG. 10.

Step 306: Sequentially schedule, to the resource node based on the priorities of all the implementation units in the target implementation set, the implementation units that need to be deployed for the plurality of to-be-scheduled jobs.

A higher priority of the implementation unit indicates that the implementation unit is more important. After the priorities of all the implementation units in the target implementation set are obtained, the implementation units that need to be deployed for the plurality of to-be-scheduled jobs are sequentially scheduled to the resource node in descending order of the priorities, to implement the corresponding jobs.

Step 307: When the implementation units of the plurality of to-be-scheduled jobs need to be released, sequentially release the implementation units in descending order of the priorities of all the implementation units in the target implementation set.

A higher priority of the implementation unit indicates that the implementation unit is more important. When a part or all of the implementation units of the plurality of to-be-scheduled jobs need to be released, the implementation units may be sequentially released in descending order of the priorities of all the implementation units in the target implementation set, that is, an implementation unit with a low priority is first released, and then an implementation unit with a high priority is released, to ensure that a more important implementation unit is released later.

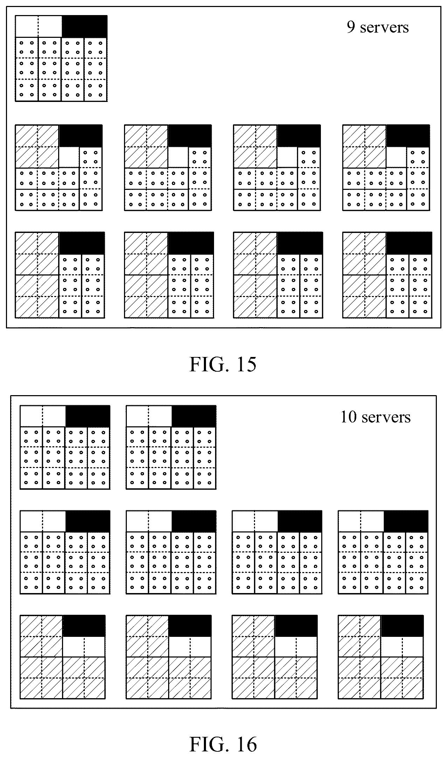

FIG. 15 shows a result of scheduling the service a and the service b shown in FIG. 5 by using the job scheduling method provided in embodiments of this application. As shown in FIG. 15, the copies of the service a and the service b are deployed on nine servers. Four servers are deployed based on the implementation combinations shown in FIG. 7, four servers are deployed based on the implementation combinations shown in FIG. 8, and one server is deployed based on the implementation combination shown in FIG. 10. It can be learned that at least a part of implementation combinations used by the deployment result in FIG. 15 includes copies of a plurality of services, and mixed-deployment of the copies of the plurality of services is implemented in one implementation combination. FIG. 16 shows a result of scheduling the service a and the service b shown in FIG. 5 by using a related technology. As shown in FIG. 16, the copies of the service a and the service b are deployed on 10 servers. Four servers are deployed based on the implementation combination shown in FIG. 9, and include only the copies of the service a. Six servers are deployed based on the implementation combination shown in FIG. 10, and include only the copies of the service b. Each implementation combination used by the deployment result in FIG. 16 includes only copies of one service. It can be learned from comparison between FIG. 15 and FIG. 16 that, based on the deployment result in FIG. 15, mixed-deployment of copies of a plurality of services can be implemented on a same server, a total quantity of required servers is smaller, and a resource fragmentation rate is lower, thereby ensuring high resource utilization; and a dispersion degree of copies on the server is large, so that high service availability can be effectively ensured.

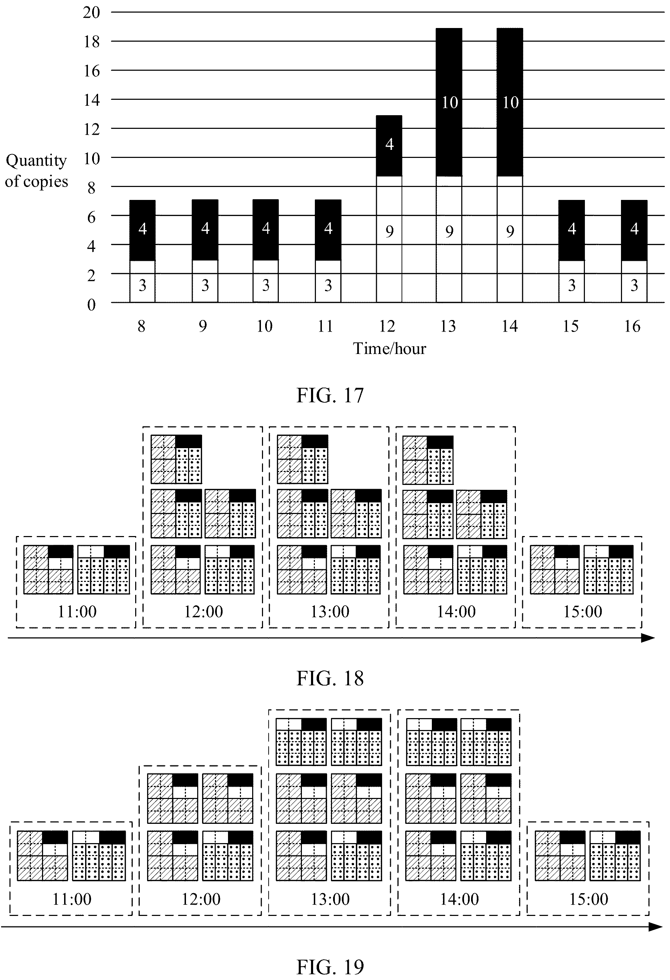

It is assumed that both the service a and the service b shown in FIG. 5 are services that can be flexibly scaled based on a service volume. FIG. 17 shows quantities of copies, of the service a and the service b, that need to be run from 8:00 to 16:00, where unfilled blocks represent the service a, and black-filled blocks represent the service b. FIG. 18 shows a result of scheduling the service a and the service b by using the job scheduling method provided in embodiments of this application in a period of one hour from 11:00 to 15:00 in an elastic scaling manner shown in FIG. 17. As shown in FIG. 18, the service a and the service b are deployed by using two servers at 11:00, and implementation combinations used by the two servers is the implementation combination shown in FIG. 9 and the implementation combination shown in FIG. 10. The service a and the service b are deployed on five servers at 12:00, and implementation combinations used add three implementation combinations shown in FIG. 7 to the implementation combinations at 11:00, where six copies of the service b are not effectively used. Deployment manners of the service a and the service b at 13:00 and 14:00 are the same as deployment manners at 12:00, and all copies are effectively used. The service a and the service b are deployed on two servers at 15:00, and the deployment manner is the same as that at 11:00. It can be learned that at least a part of implementation combinations used by the deployment result in FIG. 18 includes copies of a plurality of services, and mixed-deployment of the copies of the plurality of services is implemented in one implementation combination.

FIG. 19 shows a result of scheduling the service a and the service b by using a related technology in a period of one hour from 11:00 to 15:00 in an elastic scaling manner shown in FIG. 17. As shown in FIG. 19, the service a and the service b are deployed by using two servers at 11:00, and implementation combinations used by the two servers is the implementation combination shown in FIG. 9 and the implementation combination shown in FIG. 10. The service a and the service b are deployed on four servers at 12:00, and implementation combinations used add two implementation combinations shown in FIG. 9 to the implementation combinations at 11:00. Deployment manners of the service a and the service b at 13:00 and 14:00 are the same, and the two implementation combinations shown in FIG. 10 are added to the implementation combinations at 12:00. The service a and the service b are deployed on two servers at 15:00, and the deployment manner is the same as that at 11:00. The implementation combination shown in FIG. 9 includes only the copies of the service a, and the implementation combination shown in FIG. 10 includes only the copies of the service b. It can be learned that each implementation combination used by the deployment result in FIG. 19 includes only copies of one service.

Through comparison between FIG. 18 and FIG. 19, the following may be obtained: A total quantity of servers occupied in the deployment manner in FIG. 18 is small, and a dispersion degree of copies in each time period is large. Therefore, the following may be obtained: In a service elastic scaling scenario and a cluster scale-out or scale-in scenario, the job scheduling method provided in embodiments of this application still requires fewer servers in a time span, and a resource fragment can be effectively reclaimed after scale-in, so that a resource fragmentation rate is lower, thereby ensuring high resource utilization; and a dispersion degree of copies on the server is large, so that high service availability can be effectively ensured.

It should be noted that a policy such as selection and sorting of a copy combination used in this application is not limited to the policy mentioned in this specification. For example, it may also be combined with a plurality of manners such as a statistics-based clustering algorithm, a heuristic algorithm, and artificial intelligence (artificial intelligence, AI) model inference, to further improve scalability and scenario adaptability.

In conclusion, embodiments of this application provide the job scheduling method. In the method, the plurality of implementation combinations can be obtained based on the resource demands of the implementation units that need to be deployed for the plurality of to-be-scheduled jobs, so that at least the part of the plurality of implementation combinations include the implementation units of the at least two to-be-scheduled jobs, and the first proportion of the resource demand of the implementation combination to the idle resource specification of the resource node in the resource cluster is greater than the preset value. Then, the target implementation set is obtained based on the plurality of implementation combinations, so that the target implementation set includes the at least one implementation combination, and includes all the implementation units of the plurality of to-be-scheduled jobs. Then, the implementation units that need to be deployed for the plurality of to-be-scheduled jobs are scheduled to the resource node based on the target implementation set. In this way, because at least the part of the plurality of implementation combinations include the implementation units of the at least two to-be-scheduled jobs, mixed-deployment of the implementation units of the plurality of to-be-scheduled jobs is implemented in one implementation combination, so that an aggravation degree of implementation units of a same job can be effectively reduced, a service dispersion degree can be improved, and high service availability can be ensured.

It should be noted that a sequence of the steps of the job scheduling method provided in embodiments of this application may be properly adjusted, or the steps may be correspondingly added or deleted based on a situation. Any method variation readily figured out by a person skilled in the art within the technical scope disclosed in this application shall fall within the protection scope of this application. Therefore, details are not described.

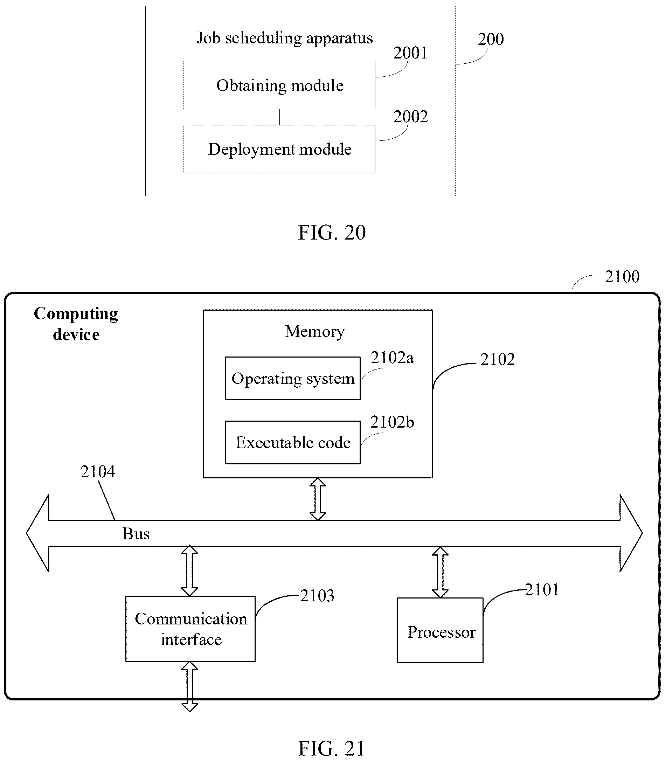

The foregoing describes the job scheduling method in embodiments of this application. Corresponding to the foregoing method, embodiments of this application further provide a job scheduling apparatus. FIG. 20 is a diagram of a structure of a job scheduling apparatus according to an embodiment of this application. Based on the following plurality of modules shown in FIG. 20, the job scheduling apparatus shown in FIG. 20 can perform all or a part of the operations shown in FIG. 3. It should be understood that the apparatus may include more additional modules than the shown modules or a part of the shown modules may be omitted. This is not limited in this embodiment of this application. Optionally, the job scheduling apparatus may be configured on a cloud computing platform. As shown in FIG. 20, the job scheduling apparatus 200 may include:
an obtaining module 2001, configured to obtain a plurality of implementation combinations based on resource demands of implementation units that need to be deployed for a plurality of to-be-scheduled jobs, where at least a part of the plurality of implementation combinations include implementation units of at least two to-be-scheduled jobs, and a first proportion of a resource demand of the implementation combination to an idle resource specification of a resource node in a resource cluster is greater than a preset value, where
the obtaining module 2001 is further configured to obtain a target implementation set based on the plurality of implementation combinations, where the target implementation set includes at least one implementation combination, and includes all implementation units of the plurality of to-be-scheduled jobs; and
a deployment module 2002, configured to schedule, to the resource node based on the target implementation set, the implementation units that need to be deployed for the plurality of to-be-scheduled jobs.

Optionally, the obtaining module 2001 is specifically configured to: obtain a plurality of implementation sets based on the plurality of implementation combinations, where each implementation set includes at least one implementation combination, and includes all the implementation units of the plurality of to-be-scheduled jobs; and determine the target implementation set in the plurality of implementation sets based on features of the plurality of implementation sets.

Optionally, the feature of the implementation set includes a first total quantity of resource nodes required for deploying the implementation set, a dispersion degree of an implementation unit of a to-be-scheduled job in the implementation set, a second total quantity of implementation combinations of implementation units, of a same to-be-scheduled job, included in the implementation set, and a third total quantity of implementation units, of a same to-be-scheduled job, included in a same implementation combination in the implementation set.

Optionally, the obtaining module 2001 is specifically configured to: obtain feature scores of the plurality of implementation sets based on at least one of the first total quantity, the dispersion degree, the second total quantity, and the third total quantity, where the feature scores are negatively correlated with the first total quantity and the third total quantity, and the feature scores are positively correlated with the dispersion degree and the second total quantity; and determine an implementation set with a highest feature score in the plurality of implementation sets as the target implementation set.

Optionally, the deployment module 2002 is specifically configured to: determine priorities of all implementation units in the target implementation set; and sequentially schedule, to the resource node based on the priorities of all the implementation units in the target implementation set, the implementation units that need to be deployed for the plurality of to-be-scheduled jobs.

Optionally, the deployment module 2002 is specifically configured to: obtain priorities of a plurality of implementation combinations in the target implementation set; and determine the priorities of all the implementation units in the target implementation set based on the priorities of the plurality of implementation combinations.

Optionally, a priority of an implementation unit in any implementation combination is positively correlated with a priority of the any implementation combination.

Optionally, the priority of the implementation combination is obtained based on a resource fragmentation rate and/or availability of the implementation combination.

Optionally, the deployment module 2002 is specifically configured to: obtain priorities of the plurality of to-be-scheduled jobs; and determine the priorities of all the implementation units in the target implementation set based on the priorities of the plurality of implementation combinations and the priorities of the plurality of to-be-scheduled jobs.

Optionally, a priority of an implementation unit of any to-be-scheduled job is positively correlated with a priority of the any to-be-scheduled job.

Optionally, the priority of the to-be-scheduled job is obtained based on a service priority and/or creation time of the to-be-scheduled job.

Optionally, the deployment module 2002 is further configured to: when the implementation units of the plurality of to-be-scheduled jobs need to be released, sequentially release the implementation units of the plurality of to-be-scheduled jobs in descending order of the priorities of all the implementation units in the target implementation set.

In conclusion, in the job scheduling apparatus provided in this embodiment of this application, the obtaining module can obtain the plurality of implementation combinations based on the resource demands of the implementation units that need to be deployed for the plurality of to-be-scheduled jobs, so that at least the part of the plurality of implementation combinations include the implementation units of the at least two to-be-scheduled jobs, and the first proportion of the resource demand of the implementation combination to the idle resource specification of the resource node in the resource cluster is greater than the preset value; and obtain the target implementation set based on the plurality of implementation combinations, so that the target implementation set includes the at least one implementation combination, and includes all the implementation units of the plurality of to-be-scheduled jobs. Then, the deployment module is configured to schedule, to the resource node based on the target implementation set, the implementation units that need to be deployed for the plurality of to-be-scheduled jobs. In this way, because at least the part of the plurality of implementation combinations include the implementation units of the at least two to-be-scheduled jobs, mixed-deployment of the implementation units of the plurality of to-be-scheduled jobs is implemented in one implementation combination, so that an aggravation degree of implementation units of a same job can be effectively reduced, a service dispersion degree can be improved, and high service availability can be ensured.

Both the obtaining module 2001 and the deployment module 2002 may be implemented by using software, or may be implemented by using hardware. For example, the following uses the obtaining module 2001 as an example to describe an implementation of the obtaining module 2001. Similarly, for an implementation of the deployment module 2002, refer to the implementation of the obtaining module 2001.

The module is used as an example of a software functional unit, and the obtaining module 2001 may include code that is run on a computing instance. The computing instance may include at least one of a physical host (computing device), a virtual machine, and a container. Further, there may be one or more computing instances. For example, the obtaining module 2001 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit, and the obtaining module 2001 may include at least one computing device, for example, a server. Alternatively, the obtaining module 2001 may be a device or the like implemented by an application-specific integrated circuit (application-specific integrated circuit, ASIC) or a programmable logic device (programmable logic device, PLD). The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the obtaining module 2001 may be distributed in a same region, or may be distributed in different regions. A plurality of computing devices included in the obtaining module 2001 may be distributed in a same AZ, or may be distributed in different AZs. Similarly, a plurality of computing devices included in the obtaining module 2001 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, any module in the obtaining module 2001 and the deployment module 2002 may be configured to perform any step in the job scheduling method. Steps implemented by the obtaining module 2001 and the deployment module 2002 may be specified as required. The obtaining module 2001 and the deployment module 2002 respectively implement different steps in the job scheduling method, to implement all functions of the job scheduling apparatus.

It can be clearly understood by a person skilled in the art that, for the purpose of convenient and brief description, for detailed working processes of the foregoing apparatuses and modules, refer to corresponding content in the foregoing method embodiments. Details are not described herein again.

An embodiment of this application provides a computing device. The computing device is configured to implement some or all functions in the job scheduling method provided in embodiments of this application. FIG. 21 is a diagram of a structure of a computing device according to an embodiment of this application. As shown in FIG. 21, the computing device 2100 includes a processor 2101, a memory 2102, a communication interface 2103, and a bus 2104. The processor 2101, the memory 2102, and the communication interface 2103 are communicatively connected to each other through the bus 2104.

The processor 2101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). Alternatively, the processor 2101 may be an integrated circuit chip, and has a signal processing capability. In an implementation process, some or all functions of the job scheduling method in this application may be completed through an integrated logic circuit of hardware in the processor 2101 or instructions in a form of software.

The memory 2102 is configured to store a computer program, and the computer program includes an operating system 2102a and executable code (namely, program instructions) 2102b. The memory 2102 is, for example, a read-only memory or another type of static storage device that can store static information and instructions, for another example, a random access memory or another type of dynamic storage device that can store information and instructions, for another example, an electrically erasable programmable read-only memory, a compact disc read-only memory or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected executable code in a form of instructions or a data structure and that can be accessed by a computer, but is not limited thereto. For example, the memory 2102 is configured to store an egress port queue, and the like. For example, the memory 2102 exists independently, and is connected to the processor 2101 through the bus 2104. Alternatively, the memory 2102 and the processor 2101 are integrated together. The memory 2102 may store executable code. When the executable code stored in the memory 2102 is executed by the processor 2101, the processor 2101 is configured to perform some or all functions of the job scheduling method provided in embodiments of this application. For an implementation in which the processor 2101 performs the process, refer to related descriptions in the foregoing embodiments. The memory 2102 may further include a software module, data, and the like that are required by another running process such as the operating system.

The communication interface 2103 uses a transceiver module, for example, but not limited to a transceiver, to implement communication with another device or a communication network. For example, the communication interface 2103 may be any one or any combination of the following components with network access functions: a network interface (for example, an Ethernet interface), a wireless network interface card, and the like.

The bus 2104 is any type of communication bus configured to implement interconnection between internal components (for example, the memory 2102, the processor 2101, and the communication interface 2103) in the computing device, for example, a system bus. In this embodiment of this application, an example in which the foregoing components in the computing device are interconnected through the bus 2104 is used for description. Optionally, the foregoing components in the computing device 2100 may be communicatively connected to each other in another connection manner other than the bus 2104. For example, the foregoing components in the computing device 2100 are interconnected through an internal logic interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When the software is used to implement embodiments, all or some of embodiments may be implemented in a form of a computer program product. The computer program product that provides a program development platform includes one or more computer instructions. When these computer program instructions are loaded and executed on the computing device, all or some of functions of the job scheduling method provided in embodiments of this application are implemented.

In addition, the computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide a program development platform.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device such as a desktop computer, a notebook computer, or a smartphone.

Optionally, for a structure of the at least one computing device included in the computing device cluster, refer to the computing device 2100 shown in FIG. 21. A memory 2102 in one or more computing devices 2100 in the computing device cluster may store same instructions used to perform the job scheduling method.

In some possible implementations, the memory 2102 in the one or more computing devices 2100 in the computing device cluster may store a part of instructions used to perform the job scheduling method. In other words, a combination of the one or more computing devices 2100 may jointly perform the instructions used to perform the job scheduling method.

It should be noted that memories 2102 in different computing devices 2100 in the computing device cluster may store different instructions, respectively used to perform a part of functions of the job scheduling apparatus. In other words, instructions stored in the memories 2102 in the different computing devices 2100 may implement functions of one or more modules in the obtaining module 2001 and the deployment module 2002.

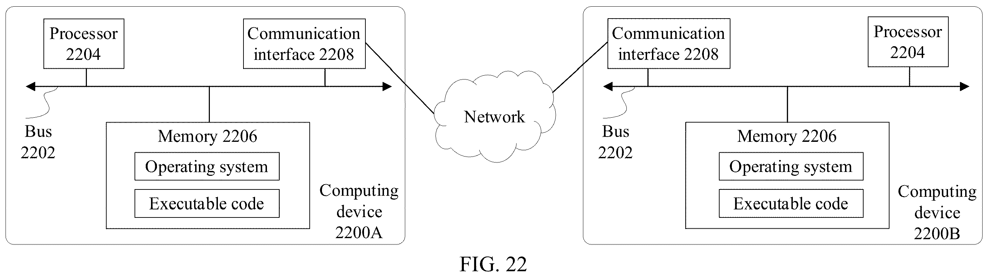

In some possible implementations, the one or more computing devices in the computing device cluster may be connected through a network. The network may be a wide area network, a local area network, or the like. FIG. 22 shows a possible implementation. As shown in FIG. 22, two computing devices 2200A and 2200B are connected through a network. Specifically, the computing devices are connected to the network through communication interfaces of the computing devices. In this possible implementation, the computing devices 2200A and 2200B include buses 2202, processors 2204, memories 2206, and communication interfaces 2208. The memory 2206 in the computing device 2200A stores instructions for performing a function of the obtaining module 2001. In addition, the memory 2206 in the computing device 2200B stores instructions for a function of the deployment module 2002.

It should be understood that a function of the computing device 2200A shown in FIG. 22 may also be completed by a plurality of computing devices 2200. Similarly, a function of the computing device 2200B may also be completed by a plurality of computing devices 2200. In addition, a deployment manner of the modules configured to implement the job scheduling method in the computing device may alternatively be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a computing device, the computing device is enabled to implement the job scheduling method provided in embodiments of this application.

An embodiment of this application further provides a computer program product including instructions. When the computer program product is run on a computer, the computer is enabled to implement the job scheduling method provided in embodiments of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, the original data, the executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A job scheduling method, wherein the method comprises:
obtaining a plurality of implementation combinations based on resource demands of implementation units that need to be deployed for a plurality of to-be-scheduled jobs, wherein at least a part of the plurality of implementation combinations comprise implementation units of at least two to-be-scheduled jobs, and a first proportion of a resource demand of the implementation combination to an idle resource specification of a resource node in a resource cluster is greater than a preset value;
obtaining a target implementation set based on the plurality of implementation combinations, wherein the target implementation set comprises at least one implementation combination, and comprises all implementation units of the plurality of to-be-scheduled jobs; and
scheduling, to the resource node based on the target implementation set, the implementation units that need to be deployed for the plurality of to-be-scheduled jobs.

2. The method according to claim 1, wherein obtaining the target implementation set based on the plurality of implementation combinations comprises:
obtaining a plurality of implementation sets based on the plurality of implementation combinations, wherein each implementation set comprises at least one implementation combination, and comprises all the implementation units of the plurality of to-be-scheduled jobs; and
determining the target implementation set in the plurality of implementation sets based on features of the plurality of implementation sets.

3. The method according to claim 2, wherein the feature comprises a first total quantity of resource nodes required for deploying the implementation set, a dispersion degree of an implementation unit of a to-be-scheduled job in the implementation set, a second total quantity of implementation combinations of implementation units, of a same to-be-scheduled job, comprised in the implementation set, and a third total quantity of implementation units, of a same to-be-scheduled job, comprised in a same implementation combination in the implementation set.

4. The method according to claim 3, wherein determining the target implementation set in the plurality of implementation sets based on the features of the plurality of implementation sets comprises:
obtaining feature scores of the plurality of implementation sets based on at least one of the first total quantity, the dispersion degree, the second total quantity, and the third total quantity, wherein the feature scores are negatively correlated with the first total quantity and the third total quantity, and the feature scores are positively correlated with the dispersion degree and the second total quantity; and
determining an implementation set with a highest feature score in the plurality of implementation sets as the target implementation set.

5. The method according to any one of claims 1 to 4, wherein scheduling, to the resource node based on the target implementation set, the implementation units that need to be deployed for the plurality of to-be-scheduled jobs comprises:
determining priorities of all implementation units in the target implementation set; and
sequentially scheduling, to the resource node based on the priorities of all the implementation units in the target implementation set, the implementation units that need to be deployed for the plurality of to-be-scheduled jobs.

6. The method according to claim 5, wherein determining the priorities of all the implementation units in the target implementation set comprises:
obtaining priorities of a plurality of implementation combinations in the target implementation set; and
determining the priorities of all the implementation units in the target implementation set based on the priorities of the plurality of implementation combinations.

7. The method according to claim 6, wherein a priority of an implementation unit in any implementation combination is positively correlated with a priority of the any implementation combination.

8. The method according to claim 7, wherein the priority of the implementation combination is obtained based on a resource fragmentation rate and/or availability of the implementation combination.

9. The method according to claim 6, wherein determining the priorities of all the implementation units in the target implementation set based on the priorities of the plurality of implementation combinations comprises:
obtaining priorities of the plurality of to-be-scheduled jobs; and
determining the priorities of all the implementation units in the target implementation set based on the priorities of the plurality of implementation combinations and the priorities of the plurality of to-be-scheduled jobs.

10. The method according to claim 9, wherein a priority of an implementation unit of any to-be-scheduled job is positively correlated with a priority of the any to-be-scheduled job.

11. The method according to claim 10, wherein the priority of the to-be-scheduled job is obtained based on a service priority and/or creation time of the to-be-scheduled job.

12. The method according to any one of claims 5 to 11, wherein the method further comprises:
when the implementation units of the plurality of to-be-scheduled jobs need to be released, sequentially releasing the implementation units of the plurality of to-be-scheduled jobs in descending order of the priorities of all the implementation units in the target implementation set.

13. A job scheduling apparatus, wherein the apparatus comprises:
an obtaining module, configured to obtain a plurality of implementation combinations based on resource demands of implementation units that need to be deployed for a plurality of to-be-scheduled jobs, wherein at least a part of the plurality of implementation combinations comprise implementation units of at least two to-be-scheduled jobs, and a first proportion of a resource demand of the implementation combination to an idle resource specification of a resource node in a resource cluster is greater than a preset value, wherein
the obtaining module is further configured to obtain a target implementation set based on the plurality of implementation combinations, wherein the target implementation set comprises at least one implementation combination, and comprises all implementation units of the plurality of to-be-scheduled jobs; and
a deployment module, configured to schedule, to the resource node based on the target implementation set, the implementation units that need to be deployed for the plurality of to-be-scheduled jobs.

14. The apparatus according to claim 13, wherein the obtaining module is specifically configured to:
obtain a plurality of implementation sets based on the plurality of implementation combinations, wherein each implementation set comprises at least one implementation combination, and comprises all the implementation units of the plurality of to-be-scheduled jobs; and
determine the target implementation set in the plurality of implementation sets based on features of the plurality of implementation sets.

15. The apparatus according to claim 14, wherein the feature comprises a first total quantity of resource nodes required for deploying the implementation set, a dispersion degree of an implementation unit of a to-be-scheduled job in the implementation set, a second total quantity of implementation combinations of implementation units, of a same to-be-scheduled job, comprised in the implementation set, and a third total quantity of implementation units, of a same to-be-scheduled job, comprised in a same implementation combination in the implementation set.

16. The apparatus according to claim 15, wherein the obtaining module is specifically configured to:
obtain feature scores of the plurality of implementation sets based on at least one of the first total quantity, the dispersion degree, the second total quantity, and the third total quantity, wherein the feature scores are negatively correlated with the first total quantity and the third total quantity, and the feature scores are positively correlated with the dispersion degree and the second total quantity; and
determine an implementation set with a highest feature score in the plurality of implementation sets as the target implementation set.

17. The apparatus according to any one of claims 13 to 16, wherein the deployment module is specifically configured to:
determine priorities of all implementation units in the target implementation set; and
sequentially schedule, to the resource node based on the priorities of all the implementation units in the target implementation set, the implementation units that need to be deployed for the plurality of to-be-scheduled jobs.

18. The apparatus according to claim 17, wherein the deployment module is specifically configured to:
obtain priorities of a plurality of implementation combinations in the target implementation set; and
determine the priorities of all the implementation units in the target implementation set based on the priorities of the plurality of implementation combinations.

19. The apparatus according to claim 18, wherein a priority of an implementation unit in any implementation combination is positively correlated with a priority of the any implementation combination.

20. The apparatus according to claim 19, wherein the priority of the implementation combination is obtained based on a resource fragmentation rate and/or availability of the implementation combination.

21. The apparatus according to claim 18, wherein the deployment module is specifically configured to:
obtain priorities of the plurality of to-be-scheduled jobs; and
determine the priorities of all the implementation units in the target implementation set based on the priorities of the plurality of implementation combinations and the priorities of the plurality of to-be-scheduled jobs.

22. The apparatus according to claim 21, wherein a priority of an implementation unit of any to-be-scheduled job is positively correlated with a priority of the any to-be-scheduled job.

23. The apparatus according to claim 22, wherein the priority of the to-be-scheduled job is obtained based on a service priority and/or creation time of the to-be-scheduled job.

24. The apparatus according to any one of claims 17 to 23, wherein the deployment module is further configured to:
when the implementation units of the plurality of to-be-scheduled jobs need to be released, sequentially release the implementation units of the plurality of to-be-scheduled jobs in descending order of the priorities of all the implementation units in the target implementation set.

25. A computing device cluster, comprising a plurality of computing devices, wherein the plurality of computing devices comprise a plurality of processors and a plurality of memories, the plurality of memories store program instructions, and the plurality of processors run the program instructions, so that the computing device cluster performs the method according to any one of claims 1 to 12.

26. A computer-readable storage medium, comprising program instructions, wherein when the program instructions are run on a computing device, the computing device is enabled to perform the method according to any one of claims 1 to 12.
